(19) **Europäisches Patentamt / European Patent Office / Office européen des brevets**

(11) **EP 4 779 709 A1**

(12) **EUROPEAN PATENT APPLICATION**
published in accordance with Art. 153(4) EPC

(43) Date of publication:
**22.07.2026 Bulletin 2026/30**

(21) Application number: **24883598.5**

(22) Date of filing: **13.06.2024**

(51) International Patent Classification (IPC):
$H01M\ 4/36^{(2006.01)}$    $H01M\ 4/525^{(2010.01)}$
$H01M\ 4/58^{(2010.01)}$    $H01M\ 4/04^{(2006.01)}$
$H01M\ 10/0525^{(2010.01)}$

(52) Cooperative Patent Classification (CPC):
H01M 10/0525; C01B 25/45; H01M 4/04;
H01M 4/131; H01M 4/136; H01M 4/36;
H01M 4/366; H01M 4/525; H01M 4/58;
H01M 4/5825; B60L 50/64; C01P 2002/82;
C01P 2004/61; C01P 2004/86; C01P 2006/40;
(Cont.)

(86) International application number:
**PCT/CN2024/099024**

(87) International publication number:
**WO 2025/112443 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2023 CN 202311628117**

(71) Applicants:
• **Contemporary Amperex Technology Co., Ltd.**
**Ningde, Fujian 352100 (CN)**
• **CONTEMPORARY AMPEREX TECHNOLOGY (HONG KONG) LIMITED**
**Central (HK)**

(72) Inventors:
• **WU, Kai**
**Fujian, 352100 (CN)**
• **LIU, Yukun**
**Fujian, 352100 (CN)**
• **YUAN, Tianci**
**Fujian, 352100 (CN)**
• **ZHANG, Xinxin**
**Fujian, 352100 (CN)**
• **WU, Lingjing**
**Fujian, 352100 (CN)**
• **KANG, Weibin**
**Fujian, 352100 (CN)**
• **CHEN, Shangdong**
**Fujian, 352100 (CN)**

(74) Representative: **Lorenz Seidler Gossel Part. mbB**
**Widenmayerstr. 23**
**80538 München (DE)**

(54) **SECONDARY BATTERY, ELECTRIC DEVICE, POSITIVE ELECTRODE ACTIVE MATERIAL AND PREPARATION METHOD THEREFOR, AND POSITIVE ELECTRODE SHEET**

(57) This application relates to the field of battery technology, and discloses a secondary battery, an electrical device, a positive active material and a preparation method thereof, and a positive electrode plate. The secondary battery includes a positive electrode plate. The positive electrode plate includes a lithium-containing phosphate positive active particle. The lithium-containing phosphate positive active particle includes a center portion and a surface portion. The surface portion is continuously or discontinuously distributed on a surface of the center portion. A thickness of the surface portion is less than or equal to 10 nm. A lithium content of the center portion is greater than a lithium content of the surface portion. The secondary battery exhibits relatively high cycle performance.

FIG. 6

(52) Cooperative Patent Classification (CPC): (Cont.)
H01M 2004/028; H01M 2220/20; Y02E 60/10

**Description**

CROSS-REFERENCE TO RELATED APPLICATIONS

This application claims priority to Chinese Invention Patent Application No. 202311628117.X, filed on November 29, 2023 and entitled "POSITIVE ACTIVE MATERIAL AND PREPARATION METHOD THEREOF, POSITIVE ELECTRODE PLATE, BATTERY, AND ELECTRICAL DEVICE", which is incorporated herein by reference in its entirety.

TECHNICAL FIELD

This application relates to the field of battery technology, and in particular, to a secondary battery, an electrical device, a positive active material and preparation method thereof, and positive electrode plate.

BACKGROUND

In recent years, with the advancement of technology of secondary batteries, secondary batteries have been widely applied in energy storage power systems such as hydro, thermal, wind, and solar power stations, and in many other fields such as electric tools, electric bicycles, electric motorcycles, electric vehicles, military equipment, and aerospace. Currently, the cycle performance of the secondary batteries needs to be further improved.

SUMMARY

In view of the deficiencies in the prior art, this application provides a secondary battery, an electrical device, a positive active material and a preparation method thereof, and a positive electrode plate, so as to give full play to the capacity of the positive active material, achieve a relatively high electronic conductivity, and endow the secondary battery with relatively high cycle performance.

According to a first aspect, this application provides a secondary battery. The secondary battery includes a positive electrode plate. The positive electrode plate includes a lithium-containing phosphate positive active particle. The lithium-containing phosphate positive active particle includes a center portion and a surface portion. The surface portion is continuously or discontinuously distributed on a surface of the center portion. A thickness of the surface portion is less than or equal to 10 nm. A lithium content of the center portion is greater than a lithium content of the surface portion.

In the positive electrode plate of the secondary battery according to this application, the lithium content in the center portion of the lithium-containing phosphate positive active particle is greater than the lithium content in the surface portion, and the thickness of the surface portion is less than or equal to 10 nm, thereby endowing the secondary battery with relatively high cycle performance.

In some embodiments, an O-Fe-O stretching vibration peak is exhibited at a Raman shift of 200 $cm^{-1}$ to 250 $cm^{-1}$ in a Raman spectrum of the lithium-containing phosphate positive active particle; and/or an O-Fe-O bending vibration peak is exhibited at a Raman shift of 255 $cm^{-1}$ to 300 $cm^{-1}$ in a Raman spectrum of the lithium-containing phosphate positive active particle. This not only gives full play to the capacity of the lithium-containing phosphate positive active particle and endows the lithium-containing phosphate positive active particle with a relatively high electronic conductivity, but also contributes to relatively high cycle performance of the secondary battery prepared from the lithium-containing phosphate positive active particles.

In some embodiments, the surface portion includes an iron oxide. With the iron oxide contained in the surface portion of the lithium-containing phosphate positive active particle, the iron oxide is of a relatively high electronic conductivity, not only endows the lithium-containing phosphate positive active particle with a relatively high electronic conductivity, but also gives full play to the capacity of the lithium-containing phosphate positive active particle. In addition, in contrast to a secondary battery prepared by using just the lithium-containing phosphate as a positive active material, the lithium-containing phosphate positive active particle with a surface containing an iron oxide according to this application can improve the cycle performance of the resulting secondary battery.

In some embodiments, the surface portion includes ferric oxide. This not only gives full play to the capacity of the lithium-containing phosphate positive active particle and endows the lithium-containing phosphate positive active particle with a relatively high electronic conductivity, but also contributes to relatively high cycle performance of the secondary battery prepared from the lithium-containing phosphate positive active particles.

In some embodiments, the lithium-containing phosphate positive active particle includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0 \leq t \leq 0.1$.

In some embodiments, the lithium-containing phosphate positive active particle includes $Li_{1+1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$.

In some embodiments, a thickness of the surface portion is 1.5 nm to 4 nm. The surface portion with a thickness falling within the above range further gives full play to the capacity of the lithium-containing phosphate positive active particle, improves the electronic conductivity of the lithium-containing phosphate positive active particle, and further improves the cycle performance of the secondary battery prepared from the lithium-containing phosphate positive active particles.

In some embodiments, a volume median diameter $D_{v50}$ of the lithium-containing phosphate positive active particle is 300 nm to 10.5 $\mu$m.

According to a second aspect, this application provides an electrical device. The electrical device includes the battery according to any embodiment in the first aspect.

According to a third aspect, this application provides a positive active material. The positive active material includes: a substrate and an oxide layer located on a surface of the substrate. The substrate includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0 \leq t \leq 0.1$. The oxide layer includes an iron oxide.

In the positive active material provided herein, the surface of the substrate includes an oxide layer containing an iron oxide. The iron oxide is of a relatively high electronic conductivity, not only endows the positive active material with a relatively high electronic conductivity, but also gives full play to the capacity of the substrate. In addition, in contrast to a secondary battery prepared by using just the substrate as a positive active material, the positive active material provided herein can improve the cycle performance of the resulting secondary battery.

In some embodiments, the substrate includes $Li_{1+x1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$.

In some embodiments, an O-Fe-O stretching vibration peak is exhibited at a Raman shift of 200 cm$^{-1}$ to 250 cm$^{-1}$ in a Raman spectrum of the positive active material; and/or an O-Fe-O bending vibration peak is exhibited at a Raman shift of 255 cm$^{-1}$ to 300 cm$^{-1}$ in a Raman spectrum of the positive active material. This not only gives full play to the capacity of the substrate and endows the positive active material with a relatively high electronic conductivity, but also contributes to relatively high cycle performance of the secondary battery prepared from the positive active material.

In some embodiments, the oxide layer includes ferric oxide, thereby not only giving full play to the capacity of the substrate and endowing the positive active material with a relatively high electronic conductivity, but also contributing to relatively high cycle performance of the secondary battery prepared from the positive active material.

In some embodiments, a thickness of the oxide layer is less than or equal to 10 nm. The oxide layer with a thickness falling within the above range not only gives full play to the capacity of the substrate and endows the positive active material with a relatively high electronic conductivity, but also contributes to relatively high cycle performance of the secondary battery prepared from the positive active material.

In some embodiments, the thickness of the oxide layer is 1.5 nm to 4 nm. The oxide layer with a thickness falling within the above range further gives full play to the capacity of the substrate and improves the electronic conductivity of the positive active material, but also further improves the cycle performance of the secondary battery prepared from the positive active material.

In some embodiments, a volume median diameter $D_{v50}$ of the positive active material is 300 nm to 10.5 $\mu$m.

According to a fourth aspect, this application provides a method for preparing a positive active material. The method includes: treating a substrate to form an oxide layer on a surface of the substrate, where the substrate includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0.001 \leq t \leq 0.1$. The oxide layer includes an iron oxide.

In this application, an oxide layer containing an iron oxide is formed on the surface of the substrate. The iron oxide is of a relatively high electronic conductivity, not only endows the positive active material with a relatively high electronic conductivity, but also gives full play to the capacity of the substrate. In addition, in contrast to a secondary battery prepared by using just the substrate as a positive active material, the positive active material provided herein can improve the cycle performance of the resulting secondary battery.

In some embodiments, the substrate includes $Li_{1+x1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$; and the method further includes: oxidizing the substrate to form the oxide layer on the surface of the substrate. In this application, the Fe-containing substrate is oxidized. An *in-situ* oxidation reaction is made to occur on the surface of the substrate through one-step oxidization operation, so as to form an oxide layer containing an iron oxide, thereby making the process simple and easily scalable. In addition, the *in-situ* oxidation is performed on the surface of the Fe-containing substrate to form an oxide layer containing an iron oxide, thereby making the bonding closer between the oxide layer and the substrate. Moreover, the distribution of the iron oxide on the surface of the substrate is relatively uniform, thereby further giving full play to the capacity of the substrate, improving the electronic conductivity of the positive active material, and improving the cycle performance of the secondary battery prepared from the positive active material.

In some embodiments, the substrate is oxidized by using an oxidizing gas. The Fe-containing substrate is oxidized by using an oxidizing gas, so as to induce an oxidation reaction between the oxidizing gas and the surface of the Fe-containing substrate to form an iron oxide. In this way, an oxide layer containing the iron oxide is formed on the surface of the substrate, thereby giving full play to the capacity of the substrate in the resulting positive active material, endowing the positive active material with a relatively high electronic conductivity, and contributing to relatively high cycle performance of the secondary battery prepared from the positive active material.

In some embodiments, the oxidizing gas includes at least one of oxygen or ozone.

In some embodiments, in the oxidizing gas, a sum of volumes of the oxygen and the ozone is 10% to 100% of a total volume of the oxidizing gas. The above technical solution increases the growth rate of the oxide layer that contains an iron oxide and that is formed on the surface of the substrate, and improves the preparation efficiency of the positive active material.

In some embodiments, the oxidization is performed at a temperature greater than or equal to 300 °C. When the Fe-containing substrate is oxidized by using an oxidizing gas, the oxidization is performed at a temperature greater than or equal to 300 °C, thereby inducing an oxidation reaction between the oxidizing gas and the Fe-containing substrate to form an iron oxide. In this way, an oxide layer containing the iron oxide is formed on the surface of the substrate, thereby giving full play to the capacity of the substrate in the resulting positive active material, endowing the positive active material with a relatively high electronic conductivity, and contributing to relatively high cycle performance of the secondary battery prepared from the positive active material.

In some embodiments, the oxidization is performed at a temperature of 300 °C to 600 °C. The oxidization temperature falling within the above range can increase the growth rate of the oxide layer that contains an iron oxide and that is formed on the surface of the Fe-containing substrate, and improve the preparation efficiency of the positive active material.

In some embodiments, during the oxidization, a flow rate of the oxidizing gas is 200 sccm to 500 sccm. The oxidizing gas introduced at a flow rate falling within the above range makes it convenient to form a dense oxide layer on the surface of the Fe-containing substrate, and makes the oxide layer evenly overlay the surface of the substrate, thereby further giving full play to the capacity of the substrate, improving the electronic conductivity of the positive active material, and contributing to relatively high cycle performance of the secondary battery prepared from the positive active material.

In some embodiments, the oxidization is performed for a duration of 2 min to 60 min. The oxidization duration falling within the above range induces sufficient reaction between the surface of the Fe-containing substrate and the oxidizing gas, and makes the mass fraction of the resulting oxide layer, containing an iron oxide, in the entire positive active material fall within an appropriate range, thereby not only giving full play to the capacity of the substrate in the positive active material, and endowing the positive active material with a relatively high electronic conductivity, but also contributing to relatively high cycle performance of the secondary battery prepared from the positive active material.

According to a fifth aspect, this application provides a positive electrode plate. The positive electrode plate includes a positive current collector and a positive active layer overlaying at least one surface of the positive current collector in a thickness direction of the current collector. The positive active layer includes a first active material. The first active material includes the positive active material according to any one of the embodiments in the third aspect or a positive active material prepared by the preparation method according to any one of the embodiments in the fourth aspect.

In some embodiments, the positive active layer further includes a second active material. The second active material is different from the first active material.

According to a sixth aspect, this application provides a battery. The battery includes the positive electrode plate disclosed in the fifth aspect.

According to a seventh aspect, this application provides an electrical device. The electrical device includes the battery disclosed in the sixth aspect.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:

FIG. 1 is a schematic structural diagram of a vehicle according to some embodiments of this application;
FIG. 2 is a schematic exploded view of a battery according to some embodiments of this application;

FIG. 3 is a schematic structural diagram of a battery cell according to some embodiments of this application;

FIG. 4 is an exploded view of a battery cell according to some embodiments of this application;

FIG. 5 is a schematic structural diagram of an electrode assembly according to some embodiments of this application;

FIG. 6 is a TEM-EDS image of a first active material prepared according to Embodiment 6 of this application;

FIG. 7 is a TEM-EDS image of a first active material according to Comparative Embodiment 1 of this application; and

FIG. 8 shows a comparison of Raman spectrograms of a first active material prepared in Embodiment 6, a first active material prepared in Embodiments 9 to 10, and a first active material provided in Comparative Embodiment 1 according to this application.

List of reference numerals: 1000-vehicle; 100-battery; 10-box; 11-accommodation space; 12-first part; 13-second part; 20-battery cell; 21-shell; 211-opening; 22-end cap assembly; 221-end cap; 222-electrode terminal; 23-electrode assembly; 231-positive electrode plate; 232 negative electrode plate; 233-separator; 24-current collecting component; 25-insulation protector; 200- controller; 300-motor.

DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, as can be seen from the market trend, the application of power batteries is increasingly extensive. Power batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. The market demand for power batteries keeps soaring with the expansion of the application fields of the power batteries.

Power batteries may be secondary batteries such as a lithium-ion battery. During charging of a lithium-ion battery, lithium ions are deintercalated from a positive active material and transmitted through an electrolyte solution, pass through a separator, and are then intercalated into a negative active layer. The positive active material is one of key factors to the performance of a secondary battery such as a lithium-ion battery.

However, currently, there is still a need to exert the capacity of the positive active material, improve the electronic conductivity, and enhance the cycle performance of the secondary battery such as a lithium-ion battery.

In view of the above situation, in order to endow a secondary battery with relatively high cycle performance, this application has designed a secondary battery. The secondary battery includes a positive electrode plate. The positive electrode plate includes a lithium-containing phosphate positive active particle. The lithium-containing phosphate positive active particle includes a center portion and a surface portion. The surface portion is continuously or discontinuously distributed on a surface of the center portion. A thickness of the surface portion is less than or equal to 10 nm. A lithium content of the center portion is greater than a lithium content of the surface portion.

In such a secondary battery, the lithium content in the center portion of the lithium-containing phosphate positive active particle in the positive electrode plate is greater than the lithium content in the surface portion, and the thickness of the surface portion is less than or equal to 10 nm, thereby endowing the secondary battery with relatively high cycle performance.

The positive electrode plate may be used for assembling a battery. The battery may be a battery cell, a battery module, a battery pack, or the like. The battery is applicable to, but not limited to use in, electrical devices such as a vehicle, watercraft, or aircraft. A power supply system of the electrical device may be formed by using the battery disclosed herein, so as to improve the cycle performance and longevity of the battery at relatively high temperature.

An embodiment of this application provides an electrical device that uses a battery as a power supply. The electrical device may be a vehicle, a mobile phone, a portable device, a laptop computer, a ship, a spacecraft, an electric toy, an electric tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

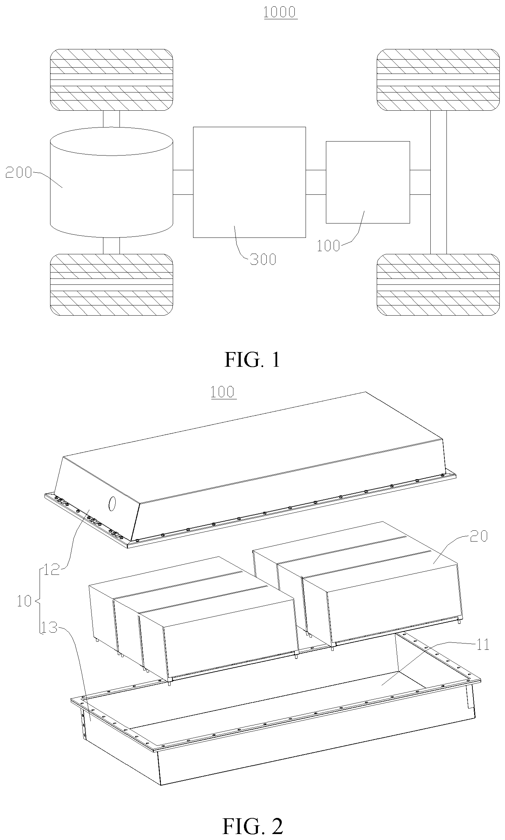

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

FIG. 2 is a schematic exploded view of a battery 100 according to some embodiments of this application. Referring to FIG. 2, the battery 100 includes a box 10 and a battery cell 20. The battery cell 20 is accommodated in the box 10.

The box 10 is configured to provide an accommodation space 11 for the battery cell 20. In some embodiments, the box 10 may include a first part 12 and a second part 13. The first part 12 and the second part 13 fit and cover each other to define the accommodation space 11 configured to accommodate the battery cell 20. Definitely, a junction between the first part 12 and the second part 13 may be sealed by a sealing element (not shown in the drawing). The sealing element may be a sealing ring, a sealant, or the like.

The first part 12 and the second part 13 may be in various shapes, such as a cuboid or cylinder. The first part 12 may be a hollow structure opened up at one side to form an accommodation cavity configured to accommodate the battery cell 20. The second part 13 may also be a hollow structure opened up at one side to form an accommodation cavity configured to accommodate the battery cell 20. The open-up side of the second part 13 fits and covers the open-up side of the first part 12 to form a box 10 that includes an accommodation space 11. Alternatively, as shown in FIG. 2, the first part 12 is a hollow structure opened at one side, and the second part 13 is a plate-like structure. The second part 13 fits and covers the opening side of the first part 12 to form the box 10 that contains the accommodation space 11.

The battery 100 may contain one or more battery cells 20. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, the plurality of battery cells 20 may be connected in series, parallel, or series-and-parallel pattern to form a battery module first. A plurality of battery modules are then connected in series, parallel, or series-and-parallel pattern to form a whole for being accommodated in the box 10. The battery cell 20 may be in a shape such as a cylinder, a flat body, a cuboid, or other shapes. FIG. 2 shows a scenario in which the battery cell 20 is in a prismatic shape.

In some embodiments, the battery 100 may further include a busbar component (not shown in the drawing). The plurality of battery cells 20 may be electrically connected by the busbar component, so as to implement series, parallel, or series-and-parallel connection between the plurality of battery cells 20.

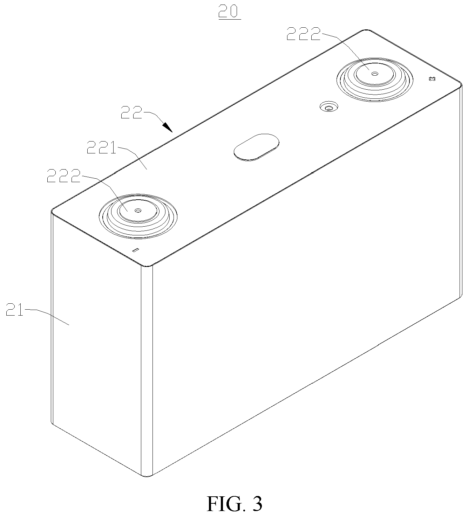

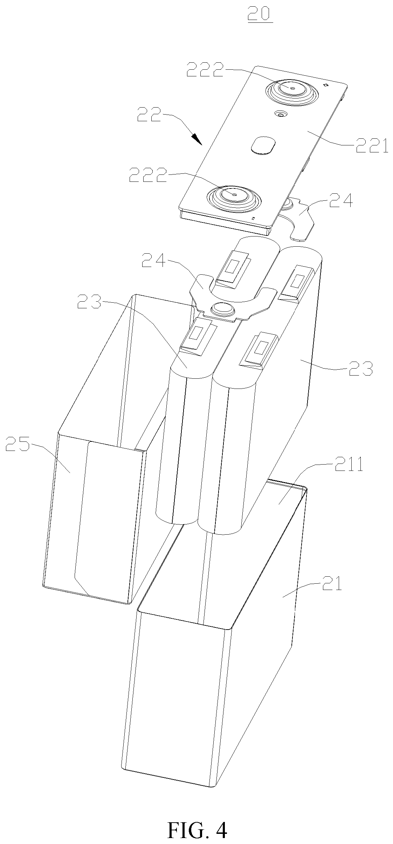

FIG. 3 is a schematic structural diagram of a battery cell 20 according to some embodiments of this application, and FIG. 4 is an exploded view of a battery cell 20 according to some embodiments of this application. Referring to FIG. 3 and FIG. 4, the battery cell 20 may include a shell 21, an end cap assembly 22, and an electrode assembly 23. An opening 211 is created on the shell 21. The electrode assembly 23 is accommodated in the shell 21. The end cap assembly 22 is configured to cover and seal the opening 211.

The shape of the shell 21 may be determined depending on the specific shape of the electrode assembly 23. For example, if the electrode assembly 23 is a cuboidal structure, the shell 21 may be a cuboidal structure. FIG. 3 and FIG. 4 shows an example in which the shell 21 and the electrode assembly 23 are in a prismatic shape.

The shell 21 may be made of a variety of materials such as copper, iron, aluminum, stainless steel, or aluminum alloy, and the materials are not particularly limited herein.

The end cap assembly 22 includes an end cap 221 and electrode terminals 222. The end cap assembly 22 is configured to cover and seal the opening 211 of the shell 21 to form a hermetically closed mounting space (not shown in the drawing). The mounting space is configured to accommodate the electrode assembly 23. The mounting space is further configured to accommodate an electrolyte such as an electrolyte solution. The end cap assembly 22 is a component configured to output electrical energy of the electrode assembly 23. The electrode terminals 222 in the end cap assembly 22 are configured to be electrically connected to the electrode assembly 23. To be specific, the electrode terminals 222 are electrically connected to tabs of the electrode assembly 23. For example, the electrode terminals 222 are connected to the tabs by a current collection component 24 to implement electrical connection between the electrode terminals 222 and the tabs.

It is hereby noted that the number of openings 211 of the shell 21 may be one or two. If the number of openings 211 of the shell 21 is one, the number of end cap assemblies 22 may also be one, and two electrode terminals 222 may be disposed in the end cap assembly 22. The two electrode terminals 222 are configured to be electrically connected to a positive tab and a negative tab of the electrode assembly 23 respectively. If there are two openings 211 of the shell 21, for example, if the two openings 211 are disposed on two opposite sides of the shell 21 respectively, the number of end cap assemblies 22 may also be two. The two end cap assemblies 22 fit and cover the two openings 211 of the shell 21 respectively. In this case, the electrode terminal 222 in one end cap assembly 22 may be a positive electrode terminal and configured to be electrically connected to the positive tab of the electrode assembly 23. The electrode terminal 222 in the other end cap assembly 22 may be a negative electrode terminal and configured to be electrically connected to the negative tab of the electrode assembly 23.

In some embodiments, as shown in FIG. 4, the battery cell 20 may further include an insulation protector 25 fixed around the electrode assembly 23. The insulation protector 25 is configured to dielectrically isolate the electrode assembly 23 from the shell 21. As an example, the insulation protector 25 is adhesive tape bonded around the electrode assembly 23. In some embodiments, the number of electrode assemblies 23 is plural, and the insulation protector 25 is disposed around the plurality of electrode assemblies 23 to combine the plurality of electrode assemblies 23 into an integral structure to keep structural stability of the electrode assembly 23. The electrode assembly 23 may be of a jelly-roll electrode assembly or a stacked-type electrode assembly, without being limited herein.

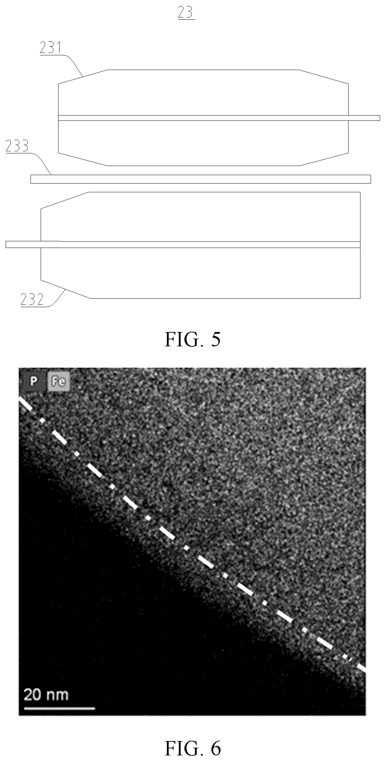

FIG. 5 is a schematic structural diagram of an electrode assembly according to some embodiments of this application. Referring to FIG. 5, the electrode assembly 23 includes a positive electrode plate 231, a negative electrode plate 232, and a separator 233. The separator 233 is disposed between the positive electrode plate 231 and the negative electrode plate 232. The electrolyte solution is located in the mounting space and fills a clearance of the electrode assembly 23.

The separator 233, the negative electrode plate 232, and the electrolyte solution are not particularly limited herein.

For the separator 233, the separator 233 may be made of a material such as a PP (polypropylene, polypropylene) porous film, a PE (polyethylene, polyethylene) porous film, a polyimide porous film, a porous film compounded of a plurality of polymers, or the like.

For the negative electrode plate 232, the negative electrode plate 232 includes a negative current collector and a negative active layer overlaying at least one surface of the negative current collector in the thickness direction of the current collector. The thicknesses of the negative current collector and negative active layer are not particularly limited herein, as long as the objectives of this application can be achieved. For example, the thickness of the negative current collector is 4 $\mu$m to 12 $\mu$m, and the thickness of the negative active layer on a single side of the negative current collector is 30 $\mu$m to 130 $\mu$m.

The material of the negative current collector may include aluminum foil, copper foil, copper alloy foil, nickel foil, stainless steel foil, titanium foil, foamed nickel, foamed copper, or a polymer substrate plated with a conductive metal. The conductive metal includes, but is not limited to, copper, nickel, or titanium. The material of the polymer substrate includes, but is not limited to, at least one of polyethylene, polypropylene, poly(ethylene-co-propylene), polyethylene terephthalate, polyethylene naphthalate, or poly(p-phenylene terephthalamide).

The negative active material in the negative active layer includes graphite, coke, and the like; or the negative active material in the negative active layer includes elemental lithium, an alloy formed by lithium and another metal element or non-metal element, where the metal element includes tin (Sn), zinc (Zn), aluminum (Al), magnesium (Mg), silver (Ag), gold (Au), gallium (Ga), indium (In), platinum (Pt), and the like, and the non-metal element includes boron (B), carbon (C), silicon (Si), and the like.

The conductive agent in the negative active layer may include, but is not limited to, a carbon material, a metal, or a conductive polymer. The carbon material may include at least one of conductive carbon black (Super P), carbon nanotubes (CNTs), carbon nanofibers, natural graphite, artificial graphite, flake graphite, carbon dots, graphene, or the like. The metal may include metal powder or metal fibers of copper, iron, aluminum, or the like. The conductive polymer may include at least one of polythiophene, polypyrrole, polyaniline, polyphenylene, or polyphenylene vinylene.

The binder in the negative active layer may include, but is not limited to, at least one of polypropylene alcohol, sodium polyacrylate, potassium polyacrylate, lithium polyacrylate, polyimide, polyamide imide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene difluoride (PVDF), polytetrafluoroethylene (PTFE), polyvinyl butyral, water-based acrylic resin, carboxymethyl cellulose (CMC), sodium carboxymethyl cellulose (CMC-Na), or the like.

The negative electrode plate 232 may be prepared by a conventional method in this field. For example, a method for preparing the negative electrode plate includes: dispersing the negative active material described above, a conductive agent, a binder, and the like in a solvent such as N-methyl-pyrrolidone (NMP) or deionized water to form a homogeneous negative electrode slurry, coating a negative current collector with the negative electrode slurry, and performing steps such as oven-drying and cold-pressing to obtain a negative electrode plate 232.

Regarding the electrolyte solution, the electrolyte solution includes a sodium salt and a nonaqueous solvent, or the electrolyte solution includes a lithium salt and a nonaqueous solvent. The sodium salt may include at least one of $NaPF_6$, $NaClO_4$, $NaBCl_4$, $NaSO_3CF_3$, or $Na(CH_3)C_6H_4SO_3$. The concentration of the sodium salt in the electrolyte solution is not particularly limited herein, as long as the objectives of this application can be achieved. The lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The concentration of the lithium salt in the electrolyte solution is not particularly limited herein, as long as the objectives of this application can be achieved. The nonaqueous solvent is not particularly limited herein, as long as the objectives of this application can be achieved. For example, the nonaqueous solvent may include, but is not limited to, at least one of a carbonate ester compound, a carboxylate ester compound, an ether compound, or another organic solvent. The carbonate ester compound may include, but is not limited to, at least one of a chain carbonate ester compound, a cyclic carbonate ester compound, or a fluorocarbonate ester compound. The chain carbonate ester compound may include, but is not limited to, at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate ester compound may include, but is not limited to, at least one of ethylene carbonate (EC), propylene carbonate (PC), butylene carbonate (BC), or vinyl ethylene carbonate (VEC). The fluorocarbonate ester compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate ester compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, trioctyl phosphate.

Regarding the positive electrode plate 231, the positive electrode plate 231 includes a positive current collector and a positive active layer overlaying at least one surface of the positive current collector in the thickness direction of the current collector. The material of the positive current collector may include aluminum foil, foamed aluminum, composite aluminum current collector (a current collector with a polymer support layer in the middle, with both surfaces of the support layer being overlaid with an aluminum metal layer), nickel foil, foamed nickel, and the like. The binder in the positive active layer is at least one selected from vinylidene fluoride, poly(vinylidene fluoride-co-hexafluoropropylene), polyacrylate ester, sodium carboxymethyl cellulose, styrene-butadiene rubber, polyurethane, poly(ethylene-co-vinyl acetate), or poly(ethylene-co-acrylic acid). The dispersant in the positive active layer is polyvinyl pyrrolidone or the like. The conductive agent in the positive active layer is at least one selected from conductive carbon black, acetylene black, Ketjen black, carbon fiber, carbon nanotubes, graphene, activated carbon, graphite flakes, graphite particles, or mesocarbon microbeads.

In this application, the positive electrode plate includes a lithium-containing phosphate positive active particle. The lithium-containing phosphate positive active particle includes a center portion and a surface portion. The surface portion is continuously or discontinuously distributed on a surface of the center portion. A thickness of the surface portion is less than or equal to 10 nm. A lithium content of the center portion is greater than a lithium content of the surface portion.

As an example, the thickness of the surface portion may be any one of 10 nm, 8 nm, 7.5 nm, 6 nm, 5 nm, 4 nm, 3 nm, 2 nm, 1 nm, 0.1 nm, or a range formed by any two thereof.

In the positive electrode plate of the secondary battery according to this application, the lithium content in the center portion of the lithium-containing phosphate positive active particle is greater than the lithium content in the surface portion, and the thickness of the surface portion is less than or equal to 10 nm, thereby endowing the secondary battery with relatively high cycle performance.

In some embodiments, the lithium content in the surface portion of the lithium-containing phosphate positive active particle is 0, thereby further improving the cycle performance of the resulting secondary battery.

In some embodiments, an O-Fe-O stretching vibration peak is exhibited at a Raman shift of 200 $cm^{-1}$ to 250 $cm^{-1}$ in a Raman spectrum of the lithium-containing phosphate positive active particle; and/or an O-Fe-O bending vibration peak is exhibited at a Raman shift of 255 $cm^{-1}$ to 300 $cm^{-1}$ in a Raman spectrum of the lithium-containing phosphate positive active particle. The lithium-containing phosphate positive active particle exhibits a corresponding Raman characteristic peak within the above wavenumber range, thereby not only giving full play to the capacity of the lithium-containing phosphate positive active particle and endowing the lithium-containing phosphate positive active particle with a relatively high electronic conductivity, but also contributing to relatively high cycle performance of the secondary battery prepared from the lithium-containing phosphate positive active particles.

In some embodiments, the surface portion includes an iron oxide.

The term "iron oxide" means an oxide of iron, that is, a compound containing only iron and oxygen ($Fe_xO_y$, where $3 \geq x \geq 1$, $4 \geq y \geq 1$). For example, the iron oxide may be ferrous oxide (FeO), ferric oxide ($Fe_2O_3$) and/or ferrosoferric oxide ($Fe_3O_4$), or another substance containing only iron and oxygen.

In the positive electrode plate, the surface portion of the lithium-containing phosphate positive active particle contains the iron oxide, and the iron oxide is of a relatively high electronic conductivity, not only endows the lithium-containing phosphate positive active particle with a relatively high electronic conductivity, but also gives full play to the capacity of the lithium-containing phosphate positive active particle. In addition, in contrast to a secondary battery prepared by using just the lithium-containing phosphate as a positive active material, the lithium-containing phosphate positive active particle with a surface containing an iron oxide according to this application can improve the cycle performance of the resulting secondary battery.

In some embodiments, the content of the iron oxide in the surface portion decreases gradually along a direction from the outermost side of the surface portion to the center portion.

In some embodiments, the surface portion includes ferric oxide ($Fe_2O_3$). This not only gives full play to the capacity of the lithium-containing phosphate positive active particle and endows the lithium-containing phosphate positive active particle with a relatively high electronic conductivity, but also contributes to relatively high cycle performance of the secondary battery prepared from the lithium-containing phosphate positive active particles.

In some embodiments, the lithium-containing phosphate positive active particle includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0 \leq t \leq 0.1$.

As an example, in the $Li_{1+x}M_{1-y}A_yP_{1-z}R_zO_{4-t}$, the value of x may be any one of -0.1, -0.07, 0.05, 0.02, 0, 0.02, 0.05, 0.07, 0.1, or a range formed by any two thereof. The value of y may be any one of 0, 0.001, 0.01, 0.02, 0.05, 0.07, 0.09, 0.1, or a range formed by any two thereof. The value of z may be any one of 0, 0.01, 0.02, 0.05, 0.07, 0.09, 0.1, or a range formed by any two thereof. The value of t may be any one of 0, 0.001, 0.01, 0.02, 0.05, 0.07, 0.09, 0.1, or a range formed by any two thereof.

In some embodiments, the lithium-containing phosphate positive active particle includes $Li_{1+x1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$.

As an example, in the $Li_{1+x1}Fe_{1-y1}A_{y1}PO_{4-t1}$, the value of x1 may be any one of 0, 0.01, 0.02, 0.03, 0.04, 0.05, or a range formed by any two thereof. The value of y1 may be any one of 0, 0.01, 0.02, 0.03, 0.04, 0.05, or a range formed by any two thereof. The value of t1 may be any one of 0, 0.001, 0.005, 0.01, 0.015, 0.017, 0.02, or a range formed by any two thereof.

Further, in some embodiments, the substrate includes $LiFePO_4$.

In some embodiments, the thickness of the surface portion is less than or equal to 8 nm. The surface portion with a thickness falling within the above range further gives full play to the capacity of the lithium-containing phosphate positive active particle, improves the electronic conductivity of the lithium-containing phosphate positive active particle, and further improves the cycle performance of the secondary battery prepared from the lithium-containing phosphate positive active particles.

In some embodiments, the thickness of the surface portion is 1 nm to 8 nm. The surface portion with a thickness falling within the above range further gives full play to the capacity of the lithium-containing phosphate positive active particle, improves the electronic conductivity of the lithium-containing phosphate positive active particle, and further improves the cycle performance of the secondary battery prepared from the lithium-containing phosphate positive active particles.

In some embodiments, a thickness of the surface portion is 1.5 nm to 4 nm. The surface portion with a thickness falling within the above range further gives full play to the capacity of the lithium-containing phosphate positive active particle, improves the electronic conductivity of the lithium-containing phosphate positive active particle, and further improves the cycle performance of the secondary battery prepared from the lithium-containing phosphate positive active particles.

In some embodiments, a volume median diameter $D_{v50}$ of the lithium-containing phosphate positive active particle is 300 nm to 10.5 $\mu$m.

As an example, the volume median diameter $D_{v50}$ of the lithium-containing phosphate positive active particles may be any one of 300 nm, 400 nm, 500 nm, 600 nm, 700 nm, 800 nm, 900 nm, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 10.5 $\mu$m, or a range formed by any two thereof.

In this application, the positive active material in the positive active layer includes a first active material. The first active material includes: a substrate and an oxide layer located on a surface of the substrate. The substrate includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0 \leq t \leq 0.1$. The oxide layer includes an iron oxide.

The "oxide layer located on the surface of the substrate" means that the oxide layer at least partly overlays the surface of the substrate. That is, the surface of the substrate is fully overlaid with the oxide layer, or just a part of the surface of the substrate is overlaid with the oxide layer.

The "iron oxide" means an oxide of iron, that is, a compound containing only iron and oxygen ($Fe_xO_y$, where $3 \geq x \geq 1$, $4 \geq y \geq 1$). For example, the iron oxide may be ferrous oxide (FeO), ferric oxide ($Fe_2O_3$) and/or ferrosoferric oxide ($Fe_3O_4$), or another substance containing only iron and oxygen.

As an example, in the $Li_{1+x}M_{1-y}A_yP_{1-z}R_zO_{4-t}$, the value of x may be any one of -0.1, -0.07, 0.05, 0.02, 0, 0.02, 0.05, 0.07, 0.1, or a range formed by any two thereof. The value of y may be any one of 0, 0.001, 0.01, 0.02, 0.05, 0.07, 0.09, 0.1, or a range formed by any two thereof. The value of z may be any one of 0, 0.01, 0.02, 0.05, 0.07, 0.09, 0.1, or a range formed by any two thereof. The value of t may be any one of 0, 0.001, 0.01, 0.02, 0.05, 0.07, 0.09, 0.1, or a range formed by any two thereof.

In the first active material provided herein, the surface of the substrate is overlaid with an oxide layer containing an iron oxide. The iron oxide is of a relatively high electronic conductivity, and can improve the electron conducting performance of the first active material. In addition, the capacity of the substrate in the first active material can be utilized effectively. Moreover, in contrast to a secondary battery prepared by using just the substrate as a positive active material, the first active material provided herein can improve the cycle performance of the resulting secondary battery.

In some embodiments, the lithium content of the substrate is greater than the lithium content of the oxide layer, thereby endowing the resulting secondary battery with relatively high cycle performance.

In some embodiments, the lithium content of the oxide layer is 0, thereby further improving the cycle performance of the resulting secondary battery.

In some embodiments, the substrate includes $Li_{1+x1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$.

As an example, in the $Li_{1+x1}Fe_{1-y1}A_{y1}PO_{4-t1}$, the value of x1 may be any one of 0, 0.01, 0.02, 0.03, 0.04, 0.05, or a range formed by any two thereof. The value of y1 may be any one of 0, 0.01, 0.02, 0.03, 0.04, 0.05, or a range formed by any two thereof. The value of t1 may be any one of 0, 0.001, 0.005, 0.01, 0.015, 0.017, 0.02, or a range formed by any two thereof.

Further, in some embodiments, the substrate includes $LiFePO_4$.

In some embodiments, an O-Fe-O stretching vibration peak is exhibited at a Raman shift of 200 cm$^{-1}$ to 250 cm$^{-1}$ in a Raman spectrum of the first active material; and/or an O-Fe-O bending vibration peak is exhibited at a Raman shift of

255 cm$^{-1}$ to 300 cm$^{-1}$ in a Raman spectrum of the first active material. The first active material exhibits a corresponding Raman characteristic peak in the above wavenumber range, thereby not only giving full play to the capacity of the substrate and endowing the first active material with a relatively high electronic conductivity, but also contributing to relatively high cycle performance of the secondary battery prepared from the first active material.

In some embodiments, the oxide layer includes ferric oxide ($Fe_2O_3$). This not only gives full play to the capacity of the substrate and endows the first active material with a relatively high electronic conductivity, but also contributes to relatively high cycle performance of the secondary battery prepared from the first active material.

In some embodiments, the content of the iron oxide in the oxide layer decreases gradually along a direction from the outermost side of the oxide layer to the substrate.

In some embodiments, the thickness of the oxide layer is less than or equal to 10 nm, thereby not only giving full play to the capacity of the substrate and endowing the first active material with a relatively high electronic conductivity, but also contributing to relatively high cycle performance of the secondary battery prepared from the first active material.

As an example, the thickness of the oxide layer may be any one of 10 nm, 8 nm, 7.5 nm, 6 nm, 5 nm, 4 nm, 3 nm, 2 nm, 1 nm, 0.1 nm, or a range formed by any two thereof.

In some embodiments, the thickness of the oxide layer is less than or equal to 8 nm. The oxide layer with a thickness falling within the above range further gives full play to the capacity of the substrate and improves the electronic conductivity of the first active material, but also further improves the cycle performance of the secondary battery prepared from the first active material.

In some embodiments, the thickness of the oxide layer is 1 nm to 8 nm. This not only gives full play to the capacity of the substrate and endows the first active material with a relatively high electronic conductivity, but also contributes to relatively high cycle performance of the secondary battery prepared from the first active material.

As an example, the thickness of the oxide layer may be any one of 1 nm, 1.5 nm, 2 nm, 2.5 nm, 3 nm, 3.5 nm, 4 nm, 4.5 nm, 5 nm, 6 nm, 7.5 nm, 8 nm, or a range formed by any two thereof.

In some embodiments, the thickness of the oxide layer is 1.5 nm to 4 nm, thereby further giving full play to the capacity of the substrate, improving the electronic conductivity of the first active material, and further improving the cycle performance of the secondary battery prepared from the first active material.

In some embodiments, the volume median diameter $D_{v50}$ of the first active material is 300 nm to 10.5 $\mu$m.

As an example, the volume median diameter $D_{v50}$ of the first active material may be any one of 300 nm, 400 nm, 500 nm, 600 nm, 700 nm, 800 nm, 900 nm, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 10.5 $\mu$m, or a range formed by any two thereof.

What has been described above is the first active material, and the following describes in detail a method for preparing the first active material.

In this application, the method includes: treating a substrate to form an oxide layer on a surface of the substrate, where the substrate includes $Li_{1+x}M_{1-y}A_yP_{1-z}R_zO_{4-t}$, where M includes at least one of Fe, Co, or Ni; A includes at least one of Mn, Zn, Al, Na, K, Mg, Mo, W, Ti, V, Zr, Fe, Ni, Co, Ga, Sn, Sb, Nb, or Ge; and R includes at least one of B, S, Si, or N; $-0.1 \leq x \leq 0.1$, $0 \leq y \leq 0.1$, $0 \leq z \leq 0.1$, and $0.001 \leq t \leq 0.1$. The oxide layer includes an iron oxide.

"To form an oxide layer on a surface of the substrate" means that the oxide layer at least partly overlays the surface of the substrate. That is, the surface of the substrate is fully overlaid with the oxide layer, or just a part of the surface of the substrate is overlaid with the oxide layer.

The term "iron oxide" means an oxide of iron, that is, a compound containing only iron and oxygen ($Fe_xO_y$, where $3 \geq x \geq 1$, $4 \geq y \geq 1$). For example, the iron oxide may be ferrous oxide (FeO), ferric oxide ($Fe_2O_3$) and/or ferrosoferric oxide ($Fe_3O_4$), or another substance containing only iron and oxygen.

As an example, in the substrate, the value of x may be any one of -0.1, -0.07, 0.05, 0.02, 0, 0.02, 0.05, 0.07, 0.1, or a range formed by any two thereof. The value of y may be any one of 0, 0.01, 0.02, 0.05, 0.07, 0.09, 0.1, or a range formed by any two thereof. The value of z may be any one of 0, 0.01, 0.02, 0.05, 0.07, 0.09, 0.1, or a range formed by any two thereof. The value of t may be any one of 0, 0.001, 0.01, 0.02, 0.05, 0.07, 0.09, 0.1, or a range formed by any two thereof.

In this application, an oxide layer containing an iron oxide is formed on the surface of the substrate. The iron oxide is of a relatively high electronic conductivity, not only endows the first active material with a relatively high electronic conductivity, but also gives full play to the capacity of the substrate. In addition, in contrast to a secondary battery prepared by using just the substrate as a positive active material, the first active material provided herein can improve the cycle performance of the resulting secondary battery.

In some embodiments, the substrate includes $Li_{1+x1}Fe_{1-y1}A_{y1}PO_{4-t1}$, where A includes at least one of Mn, Al, Ti, V, Ni, or Zn; $0 \leq x1 \leq 0.05$, $0 \leq y1 \leq 0.05$, and $0 \leq t1 \leq 0.02$; and the method further includes: oxidizing the substrate to form the oxide layer on the surface of the substrate. In this application, the Fe-containing substrate is oxidized. An *in-situ* oxidation reaction is made to occur on the surface of the Fe-containing substrate through one-step oxidization operation, so as to form an oxide layer containing an iron oxide and located on the surface of the substrate. In other words, the oxide layer containing the iron oxide is formed through *in-situ* oxidation on the surface of the Fe-containing substrate.

It is hereby noted that, in other feasible embodiments, the step of forming an oxide layer on the surface of the substrate may be performed by: a first method: mixing a slurry containing an iron oxide with the substrate, and then drying and grinding the mixture; or, a second method: mixing an iron source with the substrate, and then oxidizing the mixed system. In contrast to the above two methods, this application provides a method, that is, "oxidizing the Fe-containing substrate". In this method, an *in-situ* oxidation reaction is made to occur on the surface of the Fe-containing substrate through one-step oxidization operation, so as to form an oxide layer containing an iron oxide, thereby making the process simple and easily scalable. In addition, the *in-situ* oxidation is performed on the surface of the Fe-containing substrate to form an oxide layer containing an iron oxide, thereby making the bonding closer between the oxide layer and the substrate. Moreover, the distribution of the iron oxide on the surface of the substrate is relatively uniform, thereby further giving full play to the capacity of the substrate, improving the electronic conductivity of the first active material, and improving the cycle performance of the secondary battery prepared from the first active material.

As an example, in the $Li_{1+x1}Fe_{1-y1}A_{y1}PO_{4-t1}$, the value of x1 may be any one of 0, 0.01, 0.02, 0.03, 0.04, 0.05, or a range formed by any two thereof. The value of y1 may be any one of 0, 0.01, 0.02, 0.03, 0.04, 0.05, or a range formed by any two thereof. The value of t1 may be any one of 0, 0.001, 0.005, 0.01, 0.015, 0.017, 0.02, or a range formed by any two thereof.

Further, in some embodiments, the substrate is $LiFePO_4$.

In some embodiments, the substrate is oxidized by using an oxidizing gas. By oxidizing the Fe-containing substrate by use of the oxidizing gas, an oxidation reaction occurs between the oxidizing gas and the surface of the Fe-containing substrate to form an iron oxide. In this way, an oxide layer containing an iron oxide is formed on the surface of the substrate, thereby giving full play to the capacity of the substrate in the resulting first active material, endowing the first active material with a relatively high electronic conductivity, and contributing to relatively high cycle performance of the secondary battery prepared from the first active material.

In some embodiments, the oxidizing gas includes at least one of oxygen or ozone.

"The oxidizing gas includes at least one of oxygen or ozone" means that the oxidizing gas may be oxygen alone or ozone alone, or, the oxidizing gas includes only oxygen and ozone, or, the oxidizing gas includes other gases, for example, an inert gas (including but not limited to nitrogen and/or argon, and the like). As an example, the oxidizing gas may be air.

In some embodiments, in the oxidizing gas, a sum of volumes of the oxygen and the ozone is 10% to 100% of a total volume of the oxidizing gas. The above technical solution increases the growth rate of the oxide layer that contains an iron oxide and that is formed on the surface of the substrate, and improves the preparation efficiency of the first active material.

As an example, in the oxidizing gas, a volume fraction of a sum of volumes of oxygen and ozone in the oxidizing gas based on the total volume of the oxidizing gas may be any one of 10%, 20%, 30%, 40%, 50%, 60%, 70%, 80%, 90%, 100%, or a range formed by any two thereof.

In some embodiments, the oxidization is performed at a temperature greater than or equal to 300 °C. In this way, an oxidation reaction occurs on the Fe-containing substrate to form an iron oxide. In this way, an oxide layer containing an iron oxide is formed on the surface of the substrate, thereby giving full play to the capacity of the substrate in the resulting first active material, endowing the first active material with a relatively high electronic conductivity, and contributing to relatively high cycle performance of the secondary battery prepared from the first active material.

The inventor speculates that, in a case that the substrate includes $LiFePO_4$, when the temperature of the oxidization is greater than or equal to 300 °C, the reaction equation by which the oxidizing gas such as oxygen reacts with $LiFePO_4$ is: $12LiFePO_4 + 3O_2 \text{-} 2Fe_2O_3 + 4Li_3Fe_2(PO_4)_3$.

As an example, the temperature of the oxidization may be 300 °C, 400 °C, 500 °C, 600 °C, 700 °C, or the like.

In some embodiments, the oxidization is performed at a temperature of 300 °C to 600 °C. The oxidization temperature falling within the above range can increase the growth rate of the oxide layer that contains an iron oxide and that is formed on the surface of the Fe-containing substrate, and improve the preparation efficiency of the first active material.

As an example, the oxidization temperature may be any one of 300 °C, 350 °C, 400 °C, 450 °C, 500 °C, 550 °C, 600 °C, or a range formed by any two thereof.

Further, in some embodiments, the oxidization is performed at a temperature of 400 °C to 500 °C. The oxidization temperature falling within the above range can further give full play to the capacity of the substrate, further improve the electronic conductivity of the first active material, and further improve the cycle performance of the secondary battery prepared from the first active material.

In some embodiments, when the Fe-containing substrate is oxidized by using an oxidizing gas, a flow rate of the oxidizing gas is 200 sccm to 500 sccm. The flow rate falling within the above range makes it convenient to form a dense oxide layer on the surface of the Fe-containing substrate, and makes the oxide layer evenly overlay the surface of the substrate, thereby further giving full play to the capacity of the substrate, improving the electronic conductivity of the first active material, and contributing to relatively high cycle performance of the secondary battery prepared from the first active material.

As an example, when the Fe-containing substrate is oxidized by using an oxidizing gas, the flow rate of the oxidizing gas may be any one of 200 sccm, 220 sccm, 250 sccm, 270 sccm, 300 sccm, 320 sccm, 350 sccm, 370 sccm, 400 sccm, 420 sccm, 450 sccm, 470 sccm, 500 sccm, or a range formed by any two thereof.

In some embodiments, when the Fe-containing substrate is oxidized by using an oxidizing gas, the oxidization is performed for a duration of 2 to 60 minutes. The oxidization duration falling within the above range induces sufficient reaction between the surface of the Fe-containing substrate and the oxidizing gas, and makes the mass fraction of the resulting oxide layer, containing an iron oxide, in the entire first active material fall within an appropriate range, thereby not only giving full play to the capacity of the substrate in the first active material, and endowing the first active material with a relatively high electronic conductivity, but also contributing to relatively high cycle performance of the secondary battery prepared from the first active material.

As an example, when the Fe-containing substrate is oxidized by using an oxidizing gas, the oxidization duration may be any one of 2 min, 5 min, 10 min, 15 min, 20 min, 25 min, 30 min, 35 min, 40 min, 45 min, 50 min, 55 min, 60 min, or a range formed by any two thereof.

Further, in some embodiments, when the Fe-containing substrate is oxidized by using an oxidizing gas, the oxidization is performed for a duration of 10 to 30 minutes, thereby further giving full play to the capacity of the substrate in the resulting first active material, further improving the electronic conductivity of the first active material, and further improving the cycle performance of the secondary battery prepared from the first active material.

In some embodiments, the oxidization is performed in a cyclone oxidation furnace. The oxidizing gas is introduced into the cyclone oxidation furnace to oxidize the Fe-containing substrate, so that the oxidizing gas can sufficiently contact the surface of the Fe-containing substrate, thereby making it convenient to form a dense oxide layer on the surface of the Fe-containing substrate, making the oxide layer evenly overlay the surface of the substrate, and in turn, further giving full play to the capacity of the substrate, improving the electronic conductivity of the first active material, and contributing to relatively high cycle performance of the secondary battery prepared from the first active material.

As an example, the steps of oxidizing the lithium iron phosphate include: spreading the Fe-containing substrate flat in the cyclone oxidation furnace, placing the Fe-containing substrate at intervals in the cyclone oxidation furnace, and introducing air into the furnace body at a flow rate of 200 sccm to 500 sccm and at a temperature of 300 °C to 600 °C for 2 to 60 minutes.

It is hereby noted that the oxidization may be performed in a tube oxidation furnace instead.

In some embodiments, the positive active material in the positive active layer further includes a second active material in addition to the first active material. The second active material is different from the first active material.

In some embodiments, the second active material includes: a body, and a carbon layer located on the surface of the body. The body includes $Li_{1+m}C_{1-n}D_nP_{1-s}E_sO_{4-q}$, where C includes at least one of Fe, Co, or Ni; D includes at least one of Mn, Zn, Al, Na, K, Mg, Mo, W, Ti, V, Zr, Fe, Ni, Co, Ga, Sn, Sb, Nb, or Ge; and E includes at least one of B, S, Si, or N; $0 \leq m \leq 0.1$, $0 \leq n \leq 0.1$, $0 \leq s \leq 0.1$, and $0 \leq q \leq 0.1$.

"The carbon layer located on the surface of the body" means that the surface of the body is overlaid with a carbon layer, and at least a part of the carbon layer overlays the surface of the body (the surface of the body is fully overlaid with the carbon layer, or just a part of the surface of the body is overlaid with the carbon layer).

Further, in some embodiments, the body of the second active material includes $LiFePO_4$.

In some embodiments, a mass ratio of the first active material to the second active material in the positive active layer is 1: (0.5 to 3). When the mass ratio of the first active material to the second active material falls within the above range, the capacity of the positive active material is made to come into full play, the electronic conductivity of the positive active material is increased to a relatively high level, and the cycle performance of the secondary battery prepared from the positive active material is relatively high.

As an example, in the positive active layer, the mass ratio of the first active material to the second active material may be any one of 1: 0.5, 1: 0.7, 1: 1, 1: 1.5, 1: 2, 1: 2.5, and 1: 3, or a range formed by any two thereof.

In some embodiments, in the positive active material, the thickness of the carbon layer in the second active material is 0.5 nm to 10 nm.

As an example, the thickness of the carbon layer of the second active material may be any one of 0.5 nm, 1 nm, 1.5 nm, 2 nm, 3 nm, 4 nm, 5 nm, 6 nm, 7 nm, 8 nm, 9 nm, 10 nm, or a range formed by any two thereof.

In some embodiments, the volume median diameter $D_{v50}$ of the second active material is 0.5 $\mu$m to 5 $\mu$m.

As an example, the volume median diameter $D_{v50}$ of the second active material may be any one of 0.5 $\mu$m, 0.8 $\mu$m, 1.0 $\mu$m, 1.2 $\mu$m, 1.4 $\mu$m, 1.6 $\mu$m, 1.8 $\mu$m, 2 $\mu$m, 3 $\mu$m, 4 $\mu$m, 5 $\mu$m, or a range formed by any two thereof.

In some embodiments, in the second active material, the mass fraction of the carbon layer in relation to the second active material is 0.5% to 5%.

As an example, in the second active material, the mass fraction of the carbon layer in relation to the second active material may be any one of 0.5%, 0.8%, 1.0%, 1.2%, 1.5%, 1.8%, 2%, 2.5%, 3%, 4%, 5%, or a range formed by any two thereof.

In some embodiments, the material of the carbon layer in the second active material includes inorganic carbon and/or organic carbon. For example, the material of the carbon layer may include at least one of graphene, carbon black, conductive graphite, amorphous carbon, or carbon nanotubes.

It is hereby noted that this application does not limit the preparation method of the second active material.

It is hereby noted that the second active material in the positive active layer is not limited to the above substances. The second active material may be one or more selected from a lithium cobalt oxide, a lithium nickel oxide, a lithium manganese oxide, a lithium nickel manganese oxide, a lithium nickel cobalt manganese oxide, a lithium nickel cobalt aluminum oxide, or an olivine-structured lithium-containing phosphate salt, for example, may be lithium nickel cobalt manganese oxide, lithium nickel cobalt aluminum oxide, lithium cobalt oxide, lithium manganese oxide, or the like.

The above positive active material may be configured to prepare a positive electrode plate 231. The positive electrode plate 231 may be prepared by a conventional method in this field. For example, a method for preparing the positive electrode plate includes: dispersing the positive active material described above, a conductive agent, a binder, and the like in a solvent such as N-methyl-pyrrolidone (NMP) or deionized water to form a homogeneous positive electrode slurry, coating a positive current collector with the positive electrode slurry, and performing steps such as oven-drying and cold-pressing to obtain a positive electrode plate 231.

The positive electrode plate 231 may be configured to prepare an electrode assembly 23. The electrode assembly may be configured to prepare a battery 100. The battery 100 may be used as a power supply of an electrical device.

The following describes one or more embodiments in more detail with reference to the following examples. Understandably, the examples do not limit the scope of the one or more embodiments.

**Embodiment 1**

(1) Preparing a first active material

Weighing 2 grams of carbon-free $LiFePO_4$, spreading it flat and evenly in a corundum crucible of 6 cm $\times$ 3 cm $\times$ 2 cm in size. Raising the temperature of the cyclone oxidation furnace to 400 °C as an oxidization temperature in advance before the oxidization, and introducing air as an oxidizing gas into the oxidation furnace at a flow rate of 400 sccm, and, when the temperature of the oxidation furnace is stabilized at the oxidization temperature, loading the corundum crucible containing the carbon-free $LiFePO_4$ into the oxidation furnace to oxidize for 10 minutes. Taking out the oxidized carbon-free $LiFePO_4$ powder after completion of the oxidization, and cooling the powder naturally at room temperature. Grinding the resulting powder in a mortar for 10 minutes after the temperature of the powder drops to room temperature, thereby obtaining a first active material.

In the above description, "carbon-free $LiFePO_4$" is lithium iron phosphate coated with no coating layer, and the $D_{v50}$ of the carbon-free $LiFePO_4$ is 2.3 $\mu$m.

(2) Preparing a positive electrode plate

Mixing the positive active material (the positive active material is a mixture of the first active material and the second active material, and the second active material is carbon-containing $LiFePO_4$), acetylene black as a conductive agent, and polyvinylidene difluoride (PVDF) as a binder at a mass ratio of 92: 2.5: 5.5, adding an N-methyl-pyrrolidone (NMP) solvent, stirring until the system becomes uniform, and grinding the mixture for 10 minutes to form a positive electrode slurry in which the solid content is 50 wt%.

The "carbon-containing $LiFePO_4$" is $LiFePO_4$ with a surface coated with only a carbon layer. The volume median diameter $D_{v50}$ of the carbon-containing $LiFePO_4$ is 1.6 $\mu$m. The average thickness of the coating carbon layer is 1.5 nm. The mass fraction of the carbon layer in relation to the entire carbon-containing $LiFePO_4$ is 1.6 wt%. In the positive active material, the mass ratio of the first active material to the second active material is 1: 1.

Coating both sides of a 6 $\mu$m-thick positive current collector aluminum foil with the positive electrode slurry evenly, drying the foil at 120 °C for 4 hours, and then cold-pressing the foil, performing edge trimming and cutting, and drying the foil at 120 °C in a vacuum environment for 4 hours to obtain a positive electrode plate. The thickness of the positive active material layer on a single side is 200 $\mu$m.

(3) Preparing a coin cell

Using a lithium sheet (0.5 mm thick) as a negative electrode, preparing an electrolyte solution by adding 1 mol/L $LiPF_6$ into a solvent formed by mixing ethylene carbonate (EC), diethyl carbonate (DEC), and dimethyl carbonate (DMC) at a volume ratio of 1: 1: 1, and assembling the negative electrode, the electrolyte solution, and the above-prepared positive electrode plate together in a glovebox to form CR2430 coin cell.

**Embodiment 2**

This embodiment provides a coin cell. Embodiment 2 differs from Embodiment 1 only in that the oxidization temperature during the preparation of the first active material is 300 °C.

**Embodiment 3**

This embodiment provides a coin cell. Embodiment 3 differs from Embodiment 1 only in that the oxidization temperature during the preparation of the first active material is 500 °C.

**Embodiment 4**

This embodiment provides a coin cell. Embodiment 4 differs from Embodiment 1 only in that the oxidization temperature during the preparation of the first active material is 600 °C.

**Embodiment 5**

This embodiment provides a coin cell. Embodiment 5 differs from Embodiment 1 only in that the oxidization temperature during the preparation of the first active material is 280 °C.

**Embodiment 6**

This embodiment provides a coin cell. Embodiment 6 differs from Embodiment 1 only in that the oxidization temperature during the preparation of the first active material is 650 °C.

**Embodiment 7**

This embodiment provides a coin cell. Embodiment 7 differs from Embodiment 1 only in that the oxidization duration during the preparation of the first active material is 2 min.

**Embodiment 8**

This embodiment provides a coin cell. Embodiment 8 differs from Embodiment 1 only in that the oxidization duration during the preparation of the first active material is 60 min.

**Embodiment 9**

This embodiment provides a coin cell. Embodiment 9 differs from Embodiment 1 only in that the oxidization duration during the preparation of the first active material is 20 min.

**Embodiment 10**

This embodiment provides a coin cell. Embodiment 10 differs from Embodiment 1 only in that the oxidization duration during the preparation of the first active material is 30 min.

**Embodiment 11**

This embodiment provides a coin cell. Embodiment 11 differs from Embodiment 1 only in that the oxidization duration during the preparation of the first active material is 1.8 min.

**Embodiment 12**

This embodiment provides a coin cell. Embodiment 12 differs from Embodiment 1 only in that the oxidization duration during the preparation of the first active material is 65 min.

**Embodiment 13**

This embodiment provides a coin cell. Embodiment 13 differs from Embodiment 1 only in that the flow rate of the oxidizing gas during the preparation of the first active material is 200 sccm.

**Embodiment 14**

This embodiment provides a coin cell. Embodiment 14 differs from Embodiment 1 only in that the flow rate of the oxidizing gas during the preparation of the first active material is 500 sccm.

**Embodiment 15**

This embodiment provides a coin cell. Embodiment 15 differs from Embodiment 1 only in that, during the preparation of the first active material, the oxidizing gas is oxygen.

**Embodiment 16**

This embodiment provides a coin cell. Embodiment 16 differs from Embodiment 1 only in that, during the preparation of the first active material, the oxidizing gas is a mixture of ozone and argon mixed at a volume ratio of 1: 4.

**Embodiment 17**

This embodiment provides a coin cell. Embodiment 17 differs from Embodiment 1 only in that, in the positive active material, the mass ratio of the first active material to the second active material is 1: 0.5.

**Embodiment 18**

This embodiment provides a coin cell. Embodiment 18 differs from Embodiment 1 only in that, in the positive active material, the mass ratio of the first active material to the second active material is 1: 3.

**Embodiment 19**

This embodiment provides a coin cell. Embodiment 19 differs from Embodiment 1 only in that the $D_{v50}$ of the carbon-free $LiFePO_4$ used for preparing the first active material is 0.25 $\mu$m.

**Embodiment 20**

This embodiment provides a coin cell. Embodiment 20 differs from Embodiment 1 only in that the $D_{v50}$ of the carbon-free $LiFePO_4$ used for preparing the first active material is 8.2 $\mu$m.

**Comparative Embodiment 1**

This embodiment provides a coin cell. Comparative Embodiment 1 differs from Embodiment 1 only in that the first active material is carbon-free $LiFePO_4$ with $D_{v50}$ being 2.3 $\mu$m, and the positive active material is the first active material alone.
The "carbon-free $LiFePO_4$" is lithium iron phosphate coated with no coating layer.

**Comparative Embodiment 2**

This comparative embodiment provides a coin cell. Comparative Embodiment 1 differs from Embodiment 1 only in that the first active material is carbon-free $LiFePO_4$ with $D_{v50}$ being 2.3 $\mu$m, and the second active material is carbon-containing $LiFePO_4$.
The "carbon-free $LiFePO_4$" is lithium iron phosphate coated with no coating layer; the carbon-containing $LiFePO_4$ is the $LiFePO_4$ with a surface coated with only a carbon layer. The volume median diameter $D_{v50}$ of the carbon-containing $LiFePO_4$ is 1.6 $\mu$m. The average thickness of the coating carbon layer is 1.5 nm. The mass fraction of the carbon layer in relation to the entire carbon-containing $LiFePO_4$ is 1.6 wt%.

**Table 1 Preparation parameters of the first active materials and parameters of the positive active material in Embodiments 1 to 20 and Comparative Embodiments 1 to 2**

| | | Preparation conditions of first active material | | | | Positive active material in coin cell |
|---|---|---|---|---|---|---|
| | | Oxidization | Oxidizati | Oxidizing gas in use | Flow rate | |
| | | Preparation conditions of first active material | | | | Positive active material in coin |
| | | temperature (°C) | on duration (min) | | of oxidizing gas (sccm) | |
| | Embodiment 1 | 400 | 10 | Air | 400 | The mass ratio of the first active material to the second active material is 1: 1 |
| | Embodiment 2 | 300 | 10 | Air | 400 | The mass ratio of the first active material to the second active material is 1: 1 |
| | Embodiment 3 | 500 | 10 | Air | 400 | The mass ratio of the first active material to the second active material is 1: 1 |
| | Embodiment 4 | 600 | 10 | Air | 400 | The mass ratio of the first active material to the second active material is 1: 1 |
| | Embodiment 5 | 280 | 10 | Air | 400 | The mass ratio of the first active material to the second active material is 1: 1 |
| | Embodiment 6 | 650 | 10 | Air | 400 | The mass ratio of the first active material to the second active material is 1: 1 |
| | Embodiment 7 | 400 | 2 | Air | 400 | The mass ratio of the first active material to the second active material is 1: 1 |
| | Embodiment 8 | 400 | 60 | Air | 400 | The mass ratio of the first active material to the second active material is 1: 1 |
| | Embodiment 9 | 400 | 20 | Air | 400 | The mass ratio of the first active material to the second active material is 1: 1 |
| | Embodiment 10 | 400 | 30 | Air | 400 | The mass ratio of the first active material to the second active material is 1: 1 |
| | Embodiment 11 | 400 | 1.8 | Air | 400 | The mass ratio of the first active material to the second active material is 1: 1 |
| | Embodiment 12 | 400 | 65 | Air | 400 | The mass ratio of the first active material to the second active material is 1: 1 |
| | Embodiment 13 | 400 | 10 | Air | 200 | The mass ratio of the first active material to the second active material is 1: 1 |

(continued)

| | | Preparation conditions of first active material | | | | Positive active material in coin cell |
|---|---|---|---|---|---|---|
| | | Oxidization | Oxidizati | Oxidizing gas in use | Flow rate | |
| | | Preparation conditions of first active material | | | | Positive active material in coin |
| | | temperature (°C) | on duration (min) | | of oxidizing gas (sccm) | |
| | Embodiment 14 | 400 | 10 | Air | 500 | The mass ratio of the first active material to the second active material is 1: 1 |
| | Embodiment 15 | 400 | 10 | Oxygen | 400 | The mass ratio of the first active material to the second active material is 1: 1 |
| | Embodiment 16 | 400 | 10 | The volume ratio of ozone to argon is 1: 4 | 400 | The mass ratio of the first active material to the second active material is 1: 1 |
| | Embodiment 17 | 400 | 10 | Air | 400 | The mass ratio of the first active material to the second active material is 1: 0.5 |
| | Embodiment 18 | 400 | 10 | Air | 400 | The mass ratio of the first active material to the second active material is 1: 3 |
| | Embodiment | 400 | 10 | Air | 400 | The mass ratio of the first active material to the second active material is 1: 1 |
| | Embodiment 20 | 400 | 10 | Air | 400 | The mass ratio of the first active material to the second active material is 1: 1 |
| | Comparative Embodiment 1 | / | / | / | / | First active material |
| | Comparative Embodiment 2 | / | / | / | / | The mass ratio of the first active material to the second active material is 1: 1 |
| In Table 1, "/" means absence of the corresponding parameter. | | | | | | |

Testing the performance of the first active material and the coin cell:
(1) TEM-EDS analysis of the first active material

Cutting a flat cross-section through the core of the first active material by using a cross-section polisher (IB-09010CP argon ion cross-section polisher manufactured by JEOL Ltd.); and then scanning and analyzing the cross-section of the first active material by performing an elemental analysis by use of EDS together with TEM (for example, X-Max EDS by Oxford Instruments Group in the UK, used together with Thermo Scientific-Talos F200S G2 TEM by Thermo Fisher Scientific in the United States), so as to obtain an element distribution map of the elements in the cross-section. Determining the thickness of the oxide layer based on the element distribution in the cross-section; measuring the thickness of the oxide layer at 10 different positions on the cross-section, and recording an average of the measured thickness values as the thickness of the oxide layer.

(2) Raman spectroscopy analysis for the first active material

Measuring the first active material by using a LabRAM HR Evolution laser micro-Raman spectrometer, where the laser beam is emitted from a solid laser as a light source with a wavelength of 523 nm at a power of 1 mW, the diameter of the beam is 1.2 $\mu$m, the measurement mode is macro Raman, and a charge-coupled device CCD sensor is in use.

(3) Determining the volume median diameter $D_{v50}$ of the first active material

Equipment model: Malvern 2000 (MasterSizer 2000) laser particle size analyzer; reference standard: GB/T19077-2016/ISO 13320:2009.

Specific test process: Taking an appropriate amount of the first active material as a specimen (the concentration of the specimen needs to enable the level of obscuration to be 8% to 12%), adding 20 mL of anhydrous ethanol, sonicating the mixture for 5 minutes at a sonication frequency of 53 KHz and a sonication power of 120 W to completely disperse the first active material, and then determining the volume median diameter $D_{v50}$ of the first active material with reference to the standard GB/T19077 -2016/ISO 13320: 2009.

(4) Determining the electronic conductivity of the first active material

Measuring the resistance of the first active material under a pressure of 100 MPa by using a powder resistivity meter (model PRCD1100, by Initial Energy Science & Technology Co. Ltd.), and calculating the conductivity as: conductivity = powder thickness/(resistance value $\times$ area of the powder).

(5) Determining the specific capacity of the first active material

Taking the coin cells prepared in Embodiments 1 to 20 and Comparative Embodiments 1 to 2 as specimens. In a 25 °C environment, charging the coin cell at a constant current of 0.1C until the voltage reaches 4.3 V, and then charging the coin cell at a constant voltage of 4.3 V until the current drops to 0.01C; leaving the coin cell to stand for 5 minutes, and then discharging the coin cell at a current of 0.1C until the voltage drops to 2.0 V; and recording the resulting discharge capacity as $C_1$. Repeating the above operations for a 2nd time, and recording the resulting discharge capacity as $C_2$. Preparing three parallel specimens of coin cells, averaging out the $C_2$ values of the three parallel specimens, and recording the average value as an average discharge capacity $C_0$ (unit: mAh/g). Calculating the specific capacity of the first active material as: specific capacity = $(C_0 - C_m \times A_1)/A_2$, where $C_m$ is the discharge capacity of the second active material, and is 150 mAh/g; $A_1$ is the mass percent (%) of the second active material in the positive active material, and $A_2$ is the mass percent (%) of the first active material in the positive active material.

(6) Testing the cycle performance of the coin cell

Taking the coin cells prepared in Embodiments 1 to 20 and Comparative Embodiments 1 to 2 as specimens. In a 25 °C environment, charging the coin cell at a constant current of 0.1C until the voltage reaches 4.3 V, and then charging the coin cell at a constant voltage of 4.3 V until the current drops to 0.01C; leaving the coin cell to stand for 5 minutes, and then discharging the coin cell at a current of 0.1C until the voltage drops to 2.0 V, thereby completing one charge-discharge cycle. Recording the resulting discharge capacity as a 1st-cycle discharge capacity. Performing the above charge-discharge operations on the coin cell for 50 cycles, and recording the 50th-cycle discharge capacity. Calculating the capacity retention rate of the coin cell at the end of the cycling according to the following formula:

50th-cycle capacity retention rate of the coin cell (%) = (50th-cycle discharge capacity/1st-cycle discharge capacity) $\times$ 100%.

The performance parameters of the first active material and the coin cell are shown in Table 2.

**Table 2 Performance of the first active material and the coin cell**

|  | First active material | | | | Coin cell |
|---|---|---|---|---|---|
|  | $D_{v50}$ ($\mu$m) | Thickness of oxide layer (nm) | Electronic conductivity (S/cm) | Specific capacity (mAh/g) | 50th-cycle capacity retention rate (%) |
| Embodiment 1 | 3.0 | 2 | $5.78 \times 10^{-6}$ | 130 | 95 |
| Embodiment 2 | 2.5 | <1 | $7.36 \times 10^{-9}$ | 79 | 71 |
| Embodiment 3 | 3.1 | 3 | $5.36 \times 10^{-7}$ | 118 | 89 |
| Embodiment 4 | 3.3 | 5 | $7.64 \times 10^{-8}$ | 98 | 83 |
| Embodiment 5 | 2.4 | <1 | $5.33 \times 10^{-9}$ | 77 | 70 |
| Embodiment 6 | 3.6 | 8 | $1.33 \times 10^{-8}$ | 85 | 79 |
| Embodiment 7 | 2.5 | <1 | $8.97 \times 10^{-9}$ | 83 | 75 |
| Embodiment 8 | 3.4 | 6 | $5.31 \times 10^{-8}$ | 95 | 82 |

(continued)

| | First active material | | | | Coin cell |
|---|---|---|---|---|---|
| | $D_{v50}$ ($\mu$m) | Thickness of oxide layer (nm) | Electronic conductivity (S/cm) | Specific capacity (mAh/g) | 50th-cycle capacity retention rate (%) |
| Embodiment 9 | 3.1 | 3 | $6.56 \times 10^{-7}$ | 121 | 90 |
| Embodiment 10 | 3.2 | 4 | $1.06 \times 10^{-7}$ | 107 | 85 |
| Embodiment 11 | 2.4 | <1 | $7.56 \times 10^{-9}$ | 80 | 73 |
| Embodiment 12 | 3.5 | 7 | $3.67 \times 10^{-8}$ | 89 | 80 |
| Embodiment 13 | 2.9 | 1.5 | $8.56 \times 10^{-7}$ | 124 | 92 |
| Embodiment 14 | 3.1 | 3 | $8.67 \times 10^{-7}$ | 127 | 93 |
| Embodiment 15 | 3.2 | 4 | $1.56 \times 10^{-7}$ | 112 | 88 |
| Embodiment 16 | 3.1 | 3 | $5.21 \times 10^{-7}$ | 117 | 89 |
| Embodiment 17 | 3.0 | 2 | $5.78 \times 10^{-6}$ | 130 | 93 |
| Embodiment 18 | 3.0 | 2 | $5.78 \times 10^{-6}$ | 130 | 98 |
| Embodiment 19 | 0.325 | 2.5 | $1.56 \times 10^{-6}$ | 132 | 96 |
| Embodiment 20 | 10.1 | 2 | $8.61 \times 10^{-7}$ | 123 | 91 |
| Comparative Embodiment 1 | 2.3 | / | Overrange | 20 | 46 |
| Comparative Embodiment 2 | 2.3 | / | Overrange | 20 | 68 |

In Table 2, "/" means absence of the corresponding parameter; "thickness of oxide layer" means an average thickness of the oxide layer; for Embodiments 1 to 20, the oxide layer means the iron oxide layer on the surface of lithium iron phosphate; and "overrange" means that the corresponding data is too small to be measured.

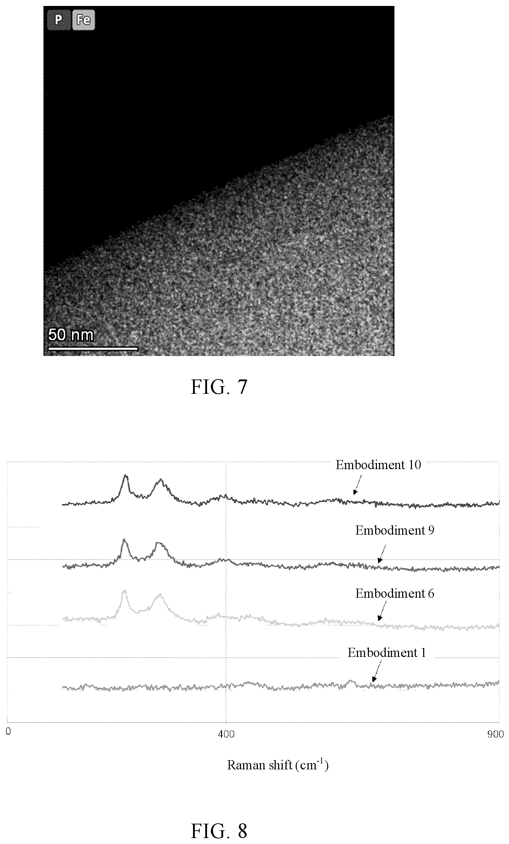

FIG. 6 is a TEM-EDS image of a first active material prepared according to Embodiment 6 of this application, and FIG. 7 is a TEM-EDS image of a first active material according to Comparative Embodiment 1 of this application.

As can be seen from FIG. 6, the surface of the first active material prepared according to Embodiment 6 of this application includes an iron-rich surface layer (the dashed line in FIG. 6 indicates an interface between the iron-rich surface layer of the first active material and the LiFePO$_4$ substrate). The thickness of the surface layer is approximately 8 nm. As shown in FIG. 7, the phosphorus and iron in an entire particle of the first active material provided in Comparative Embodiment 1 (that is, carbon-free LiFePO$_4$, LiFePO$_4$ coated with no coating layer) are distributed uniformly, without giving rise to an iron-rich surface layer. This indicates that after the oxidization, an iron-rich surface layer is formed on the surface of the carbon-free LiFePO$_4$ of the first active material prepared according to Embodiment 6 of this application.

FIG. 8 shows a comparison of Raman spectrograms of a first active material prepared in Embodiment 6, a first active material prepared in Embodiments 9 to 10, and a first active material provided in Comparative Embodiment 1 according to this application.

As can be seen from FIG. 8, the Raman spectra of the first active material prepared by oxidizing for different durations in Embodiment 6 and Embodiments 9 to 10 of this application exhibit two significant Raman characteristic peaks in the wavenumber range of 200 cm$^{-1}$ to 300 cm$^{-1}$. The positions of the two Raman characteristic peaks are near 225 cm$^{-1}$ and 290 cm$^{-1}$ respectively, and correspond to the $\upsilon$ (O-Fe-O) stretching vibration peak and the $\delta$ (O-Fe-O) bending vibration peak respectively. This indicates that the first active materials prepared after oxidizing for different durations in Embodiment 6 and Embodiments 9 to 10 have formed iron oxide ($\alpha$-Fe$_2$O$_3$). In contrast, the Raman spectrum of the first active material provided in Comparative Embodiment 1 (that is, carbon-free LiFePO$_4$, LiFePO$_4$ coated with no coating layer) exhibits no Raman characteristic peak in the wavenumber range of 200 cm$^{-1}$ to 300 cm$^{-1}$.

As can be seen from FIG. 6 and FIG. 8, after the carbon-free LiFePO$_4$ is oxidized in this application, an oxide layer containing $\alpha$-Fe$_2$O$_3$ can be formed on the surface of the carbon-free LiFePO$_4$.

As can be seen from Table 2, the electronic conductivity and specific capacity of the first active material prepared according to Embodiments 1 to 20 of this application both are higher than those of the first active material provided in Comparative Embodiment 1 (that is, carbon-free LiFePO$_4$, LiFePO$_4$ coated with no coating layer). This indicates that the first active material with an oxide layer according to this application alleviates the disadvantages of a low capacity and a low electronic conductivity of the LiFePO$_4$ coated with no carbon layer.

As can be seen from Table 2, the cycle performance of the coin cells corresponding to Embodiments 1 to 20 of this application is superior to the cycle performance of the coin cells corresponding to Comparative Embodiments 1 to 2. This indicates that the first active material with an oxide layer according to this application alleviates the disadvantage of inferior cycle performance of the LiFePO$_4$ coated with no carbon layer, and exhibits relatively high cycle performance.

The embodiments described above are merely a part of but not all of the embodiments of this application. The detailed description of the embodiments of this application is not intended to limit the scope of this application as claimed, but merely represents selected embodiments of this application. All other embodiments derived by a person of ordinary skill in the art based on the embodiments of this application without making any creative effort fall within the protection scope of this application.

## Claims

1. A secondary battery, wherein the secondary battery comprises a positive electrode plate, the positive electrode plate comprises a lithium-containing phosphate positive active particle, the lithium-containing phosphate positive active particle comprises a center portion and a surface portion, the surface portion is continuously or discontinuously distributed on a surface of the center portion, a thickness of the surface portion is less than or equal to 10 nm, and a lithium content of the center portion is greater than a lithium content of the surface portion.

2. The secondary battery according to claim 1, wherein an O-Fe-O stretching vibration peak is exhibited at a Raman shift of 200 cm$^{-1}$ to 250 cm$^{-1}$ in a Raman spectrum of the lithium-containing phosphate positive active particle; and/or an O-Fe-O bending vibration peak is exhibited at a Raman shift of 255 cm$^{-1}$ to 300 cm$^{-1}$ in a Raman spectrum of the lithium-containing phosphate positive active particle.

3. The secondary battery according to claim 1 or 2, wherein the surface portion comprises an iron oxide.

4. The secondary battery according to any one of claims 1 to 3, wherein the surface portion comprises ferric oxide.

5. The secondary battery according to any one of claims 1 to 4, wherein the lithium-containing phosphate positive active particle comprises $Li_{1+x}M_{1-y}A_yP_{1-z}R_zO_{4-t}$, wherein M comprises at least one of Fe, Co, or Ni; A comprises at least one of Mn, Zn, Al, Na, K, Mg, Mo, W, Ti, V, Zr, Fe, Ni, Co, Ga, Sn, Sb, Nb, or Ge; and R comprises at least one of B, S, Si, or N; $-0.1 \leq x \leq 0.1$, $0 \leq y \leq 0.1$, $0 \leq z \leq 0.1$, and $0 \leq t \leq 0.1$.

6. The secondary battery according to claim 5, wherein the lithium-containing phosphate positive active particle comprises $Li_{1+x1}Fe_{1-y1}A_{y1}PO_{4-t1}$, wherein A comprises at least one of Mn, Al, Ti, V, Ni, or Zn; $0 \leq x1 \leq 0.05$, $0 \leq y1 \leq 0.05$, and $0 \leq t1 \leq 0.02$.

7. The secondary battery according to any one of claims 1 to 6, wherein a thickness of the surface portion is 1.5 nm to 4 nm.

8. The secondary battery according to any one of claims 1 to 7, wherein a volume median diameter $D_{v50}$ of the lithium-containing phosphate positive active particle is 300 nm to 10.5 $\mu$m.

9. An electrical device, wherein the electrical device comprises the secondary battery according to any one of claims 1 to 8.

10. A positive active material, wherein the positive active material comprises: a substrate and an oxide layer located on a surface of the substrate;

    the substrate comprises $Li_{1+x}M_{1-y}A_yP_{1-z}R_zO_{4-t}$, wherein M comprises at least one of Fe, Co, or Ni; A comprises at least one of Mn, Zn, Al, Na, K, Mg, Mo, W, Ti, V, Zr, Fe, Ni, Co, Ga, Sn, Sb, Nb, or Ge; and R comprises at least one of B, S, Si, or N; $-0.1 \leq x \leq 0.1$, $0 \leq y \leq 0.1$, $0 \leq z \leq 0.1$, and $0 \leq t \leq 0.1$; and
    the oxide layer comprises an iron oxide.

11. The positive active material according to claim 10, wherein the substrate comprises $Li_{1+x1}Fe_{1-y1}A_{y1}PO_{4-t1}$, wherein A comprises at least one of Mn, Al, Ti, V, Ni, or Zn; $0 \leq x1 \leq 0.05$, $0 \leq y1 \leq 0.05$, and $0 \leq t1 \leq 0.02$.

12. The positive active material according to claim 10 or 11, wherein an O-Fe-O stretching vibration peak is exhibited at a Raman shift of 200 cm$^{-1}$ to 250 cm$^{-1}$ in a Raman spectrum of the positive active material; and/or

an O-Fe-O bending vibration peak is exhibited at a Raman shift of 255 cm$^{-1}$ to 300 cm$^{-1}$ in a Raman spectrum of the positive active material.

13. The positive active material according to any one of claims 10 to 12, wherein the oxide layer comprises ferric oxide.

14. The positive active material according to any one of claims 10 to 13, wherein a thickness of the oxide layer is less than or equal to 10 nm; and
optionally, the thickness of the oxide layer is 1.5 nm to 4 nm.

15. The positive active material according to any one of claims 10 to 14, wherein a volume median diameter $D_{v50}$ of the positive active material is 300 nm to 10.5 μm.

16. A method for preparing a positive active material, wherein the method comprises: treating a substrate to form an oxide layer on a surface of the substrate, wherein

the substrate comprises $Li_{1+x}M_{1-y}A_yP_{1-z}R_zO_{4-t}$, wherein M comprises at least one of Fe, Co, or Ni; A comprises at least one of Mn, Zn, Al, Na, K, Mg, Mo, W, Ti, V, Zr, Fe, Ni, Co, Ga, Sn, Sb, Nb, or Ge; and R comprises at least one of B, S, Si, or N; $-0.1 \le x \le 0.1$, $0 \le y \le 0.1$, $0 \le z \le 0.1$, and $0.001 \le t \le 0.1$; and
the oxide layer comprises an iron oxide.

17. The preparation method according to claim 16, wherein the substrate comprises $Li_{1+x1}Fe_{1-y1}A_{y1}PO_{4-t1}$, wherein A comprises at least one of Mn, Al, Ti, V, Ni, or Zn; $0 \le x1 \le 0.05$, $0 \le y1 \le 0.05$, and $0 \le t1 \le 0.02$; and the method further comprises: oxidizing the substrate to form the oxide layer on the surface of the substrate.

18. The preparation method according to claim 17, wherein the substrate is oxidized by using an oxidizing gas;

optionally, the oxidizing gas comprises at least one of oxygen or ozone; and
optionally, in the oxidizing gas, a sum of volumes of the oxygen and the ozone is 10% to 100% of a total volume of the oxidizing gas.

19. The preparation method according to claim 17 or 18, wherein the oxidization is performed at a temperature greater than or equal to 300 °C; and
optionally, the oxidization is performed at a temperature of 300 °C to 600 °C.

20. The preparation method according to claim 18, wherein, during the oxidization, a flow rate of the oxidizing gas is 200 sccm to 500 sccm; and
optionally, the oxidization is performed for a duration of 2 min to 60 min.

21. A positive electrode plate, wherein the positive electrode plate comprises a positive current collector and a positive active layer overlaying at least one surface of the positive current collector in a thickness direction of the current collector, wherein
the positive active layer comprises a first active material, and the first active material comprises the positive active material according to any one of claims 10 to 15 or a positive active material prepared by the preparation method according to any one of claims 16 to 20.

22. The positive electrode plate according to claim 21, wherein the positive active layer further comprises a second active material, and the second active material is different from the first active material.

23. A secondary battery, wherein the secondary battery comprises the positive electrode plate according to claim 21 or 22.

24. An electrical device, wherein the electrical device comprises the secondary battery according to claim 23.

1000

FIG. 1

100

FIG. 2

FIG. 3

FIG. 4

FIG. 5

FIG. 6

FIG. 7

Raman shift (cm$^{-1}$)

FIG. 8

## INTERNATIONAL SEARCH REPORT

| International application No. |
|---|
| **PCT/CN2024/099024** |

| **A.** | **CLASSIFICATION OF SUBJECT MATTER** |
|---|---|

H01M4/36(2006.01)i; H01M4/525(2010.01)i; H01M4/58(2010.01)i; H01M4/04(2006.01)i; H01M10/0525(2010.01)i

According to International Patent Classification (IPC) or to both national classification and IPC

| **B.** | **FIELDS SEARCHED** |
|---|---|

Minimum documentation searched (classification system followed by classification symbols)

ICP: H01M4/-; H01M10/-

Documentation searched other than minimum documentation to the extent that such documents are included in the fields searched

Electronic data base consulted during the international search (name of data base and, where practicable, search terms used)

CNTXT, CNKI, VCN, ENTXT, ENTXTC, VEN, ISI Web of Science: 包覆, 包裹, 表面, 核, 活性材料, 活性物质, 基体, 壳, 扣式电池, 磷酸, 磷酸铁锂, 三氧化二铁, 铁氧化物, 涂层, 涂覆, 氧化, 氧化层, 氧化处理, 氧化反应, 氧化铁, 氧化亚铁, 原位, 锂, coating, wrapping, surface, core, Fe2O3, Fe3O4, FeO, Li, "P", lithium, lithium iron phosphate, matrix, nucleus, oxidation, phosphoric, shell, surface, iron trioxide, iron oxide, oxide layer?, active material, ferrous oxide, oxidation layer, oxidation treatment, oxidation reaction, in situ

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2016105358 A (TDK CORP.) 09 June 2016 (2016-06-09)<br>description, paragraphs [0017], [0033], [0036]-[0037], and [0055], embodiment 17, and table 1 | 1-16, 21-24 |
| Y | JP 2016105358 A (TDK CORP.) 09 June 2016 (2016-06-09)<br>description, paragraphs [0036]-[0037] | 17-20 |
| X | JP 2016105359 A (TDK CORP.) 09 June 2016 (2016-06-09)<br>description, paragraphs [0040], [0043]-[0044], and [0062], embodiment 20, and table 1 | 1-16, 21-24 |
| Y | JP 2016105359 A (TDK CORP.) 09 June 2016 (2016-06-09)<br>description, paragraphs [0043]-[0044] | 17-20 |
| Y | CN 109473694 A (INSTITUTE OF METAL RESEARCH, CHINESE ACADEMY OF SCIENCES) 15 March 2019 (2019-03-15)<br>description, paragraphs [0009]-[0020] | 17-20 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 August 2024** | **26 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/099024** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 115832236 A (CONTEMPORARY AMPEREX TECHNOLOGY CO., LTD.) 21 March 2023 (2023-03-21) entire document | 1-24 |
| A | CN 116154120 A (DEZHOU UNIVERSITY) 23 May 2023 (2023-05-23) entire document | 1-24 |
| A | JP 2016081716 A (HITACHI METALS, LTD.) 16 May 2016 (2016-05-16) entire document | 1-24 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | Publication date (day/month/year) |
|---|---|---|---|---|---|
| JP | 2016105358 | A | 09 June 2016 | None | |
| JP | 2016105359 | A | 09 June 2016 | None | |
| CN | 109473694 | A | 15 March 2019 | None | |
| CN | 115832236 | A | 21 March 2023 | None | |
| CN | 116154120 | A | 23 May 2023 | None | |
| JP | 2016081716 | A | 16 May 2016 | None | |

Form PCT/ISA/210 (patent family annex) (July 2022)

# EP 4 779 709 A1

**Patent documents cited in the description**

- CN 202311628117X